# EUROPEAN PATENT APPLICATION

(11) **EP 4 574 517 A1**
(43) Date of publication of application: **25.06.2025**
(21) Application number: 23217659.4
(22) Date of filing: 18.12.2023
(51) Int. Cl.: B60L 3/00, B60L 53/30, B60L 53/80, B60L 58/12, B60L 58/16, G01C 21/34, G06Q 10/04, G06Q 10/06, G06Q 10/0631, G06Q 10/08, G06Q 50/06, G06Q 50/40, G08G 1/0968, G08G 1/00, H02J 7/00

(54) **VEHICLE FLEET MANAGEMENT BASED ON ELECTRICAL ENERGY STORAGE PERFORMANCE**

(71) Applicant: VOLVO TRUCK CORPORATION, 405 08 Göteborg (SE)
(72) Inventor: LILLMAA, Henri, SE-463 72 LÖDÖSE (SE); RAY, Dripta, SE-412 76 GÖTEBORG (SE)
(74) Representative: Kransell & Wennborg KB

(57) **Abstract**

A computer system comprising processing circuitry configured to: obtain data of a set of planned routes for a vehicle fleet comprising at least partly electrified vehicles (118a,118b,118c,118d) each having an electrical energy storage system (106) comprising multiple electrical energy storage packs (107), the data including at least topology data for the planned routes, obtain energy status data and health data of the electrical energy storage systems (106) of the fleet, acquire load data for cargo to be transported along at least some of the planned routes; estimate, based on the load data and the topology for the planned routes, the power and energy demand for the planned routes; calculate, based on the estimated power and energy demand for the planned routes and the obtained energy status data and health data, a distribution of the electrical energy storage packs (107) among the vehicles (118a,118b,118c,118d) of the fleet such that the number of electrical energy storage packs (107) utilized by the fleet for completing the planned routes is minimized and a state of health parameter of the electrical energy storage packs (107) of the fleet fulfills at least one predetermined criterion, and provide output data indicating the distribution of the electrical energy storage packs (107) among the vehicles (118a,118b,118c,118d) of the fleet.

## Description

### TECHNICAL FIELD

The disclosure relates generally to electrical energy storage systems. In particular aspects, the disclosure relates to vehicle fleet management based on electrical energy storage performance. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electrical energy storage systems are subject to aging and degradation which has an impact on the ability for an electrified vehicle to complete its mission. In a fleet of vehicles, it could be an issue to efficiently distribute missions and cargo among the vehicles of the fleet due to limited information of the status of the electrical energy storage systems of the vehicles. Thus, there is a need for better optimizing the use of electrical energy storage systems in a fleet of vehicles having multiple fleet level missions to complete.

### SUMMARY

According to a first aspect of the disclosure, there is provided a computer system comprising processing circuitry configured to: obtain data of a set of planned routes for a vehicle fleet comprising at least partly electrified vehicles each having an electrical energy storage system comprising at least one electrical energy storage pack, the data including at least topology data for the planned routes, obtain energy status data and health data of the electrical energy storage packs of the fleet, acquire load data for cargo to be transported along at least some of the planned routes; estimate, based on the load data and the topology for the planned routes, the power and energy demand for the planned routes; and calculate, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfills at least one predetermined criterion, and provide output data indicating the distribution of the electrical energy storage packs among the vehicles of the fleet.

The first aspect of the disclosure may seek to optimize the use of electrical energy storage packs in a fleet of vehicles. A technical benefit may include that fewer electrical energy storage packs are needed for completing the fleet missions. In addition, a further benefit is that a surplus of electrical energy storage packs may be available that could be used for reconfiguring the vehicle(s) to take on additional new routes when the need arises. Furthermore, the wear on the electrical energy storage packs may at the same time be more uniform.

Optionally in some examples, including in at least one preferred example, the predetermined criterion may include that the spread in state of the health's of the electrical energy storage packs of the fleet is less than a predetermined spread threshold. A technical benefit may include that uniform wear and aging of the electrical energy storage packs can be ensured. The electrical energy storage packs of the fleet include the electrical energy storage packs that are not presently installed in a vehicle and the electrical energy storage packs installed in a vehicle, that is, all the electrical energy storage packs that belong to the fleet.

Optionally in some examples, including in at least one preferred example, the at least one predetermined criterion may include maintaining a uniform wear of the electrical energy storage packs within the fleet in terms of both capacity fade and power fade according to respective predetermined spread thresholds. Thus, a further improve uniformity in terms of wear and aging is facilitated.

Example spread thresholds may include that the spread should not exceed for example 15%, or 10%, or 5% of the state of health parameter such as capacity fade and power fade. Capacity fade is further known as SOHq and power fade is further known as SOHp and depends on the internal resistance of the electrical energy storage pack.

Optionally in some examples, including in at least one preferred example, the processing circuitry may be further configured to: acquire torque demand data from at least one of the vehicles when on a planned route to complete a mission; estimate a new load weight of the at least one vehicle based on the torque demand data and the topology of the route for the at least one vehicle; provide an output that indicates a deviation from the prior load data of the cargo assigned to the at least one vehicle. A technical benefit may include more accurate determination of load weight and the ability to take actions based on the more accurate load weight. Furthermore, the detected deviation could be used for improving and/or developing the load data estimation and/or calculation in the vehicle and/or on the fleet management system level, for example when receiving requests for cargo transport assignments.

Optionally in some examples, including in at least one preferred example, the processing circuitry may be further configured to: replan the route for the at least one vehicle based on the estimated new load weight and the energy status data and health data of the electrical energy storage packs of the at least one vehicle. A technical benefit may include further improved use of the electrical energy storage system of the vehicle when completing the route. For example, it may be determined that that the energy storage system could not handle a given cargo in a hilly area, in which case rerouting may be proposed to avoid the hilly area. Additionally, or alternatively, when the cargo is estimated to be lighter than expected, then the processing circuitry could request rerouting of the vehicle to take additional cargo.

Optionally in some examples, including in at least one preferred example, the processing circuitry may be further configured to: evaluate the replanned route in view of the energy status data and health data of the electrical energy storage packs of the vehicle, and add stops to the replanned route for electrical charging of the electrical energy storage system based on the outcome of the evaluation. A technical benefit may include further improved use of the electrical energy storage system of the vehicle when completing the route.

Optionally in some examples, including in at least one preferred example, the processing circuitry may be further configured to: calculate a maximum load data for each of the vehicles for at least some of the planned routes based on the present energy status data and health data of the electrical energy storage packs, wherein, calculating the distribution of the electrical energy storage packs among the vehicles of the fleet is further based on the maximum load data for each of the vehicles. A technical benefit may include more accurate distribution of the electrical energy storage packs to further optimize the use of the electrical energy storage packs.

Optionally in some examples, including in at least one preferred example, the processing circuitry may be further configured to: receive a message indicating a request for additional cargo for one of the vehicles of the fleet and an additional route for the vehicle, and calculate a maximum load data for the vehicle for the additional routes based on an updated present energy status data and health data of the electrical energy storage packs, and if the weight of the additional cargo exceeds the maximum load data, provide an output message indicating to redistribute the cargo to another vehicle of the fleet. A technical benefit may include optimized use of the electrical energy storage packs while still completing the missions on fleet level.

Optionally in some examples, including in at least one preferred example, the processing circuitry may be further configured to: receive a message indicating a request for additional cargo for one of the vehicles of the fleet and an additional route for the vehicle, and calculate a maximum load data for the vehicle for the additional route based on an updated present energy status data and health data of the electrical energy storage packs, and if the weight of the additional cargo exceeds the maximum load data, calculate a new route with minimum number of charging stops for the vehicle to reach the destination of the additional route with the additional cargo and provide an output indicating the new route. A technical benefit may include optimized use of the electrical energy storage packs while still completing the missions on fleet level.

Optionally in some examples, including in at least one preferred example, the processing circuitry may be further configured to: calculate a maximum load data for each vehicle for each route and topology based on the energy status data and health data of the electrical energy storage packs of the fleet, distribute a first set of cargo among a set of vehicles, and, calculate, based on the estimated power and energy demand for the planned routes and the obtained energy status data and health data, a distribution of the electrical energy storage packs among the remaining vehicles of the fleet such that the number of electrical energy storage packs utilized by the fleet for completing the planned routes of the remaining cargo is minimized and a state of health parameter of the electrical energy storage packs of the fleet fulfills at least one predetermined criterion. A technical benefit is that the use of the electrical energy storage packs may be more efficient even if the load data is not known for all cargo.

There is further provided a server comprising the computer system.

According to a second aspect of the disclosure, there is provided a computer-implemented method, comprising: obtaining, by a processor of a computer system, data of a set of planned routes for a vehicle fleet comprising at least partly electrified vehicles each having an electrical energy storage system comprising at least one electrical energy storage pack, the data including at least topology data for the planned routes, obtaining, by the processor, energy status data and health data of the electrical energy storage packs of the fleet, acquiring, by the processor, load data for cargo to be transported along at least some of the planned routes; estimating, by the processor, based on the load data and the topology for the planned routes, the power and energy demand for the planned routes; and calculating, by the processor, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfills at least one predetermined criterion, and providing, by the processor, output data indicating the distribution of the electrical energy storage packs among the vehicles of the fleet.

The second aspect of the disclosure may seek to optimize the use of electrical energy storage packs in a fleet of vehicles. A technical benefit may include that fewer electrical energy storage packs are needed for completing the fleet missions. In addition, a further benefit is that a surplus of electrical energy storage packs may be available that could be used for reconfiguring the vehicle(s) to take on additional new routes when the need arises. Furthermore, the wear on the electrical energy storage packs may at the same time be more uniform.

Optionally in some examples, including in at least one preferred example, the method may comprise: acquiring, by the processor, torque demand data from at least one of the vehicles when on a planned route to complete a mission; estimating, by the processor, a new load weight of the at least one vehicle based on the torque demand data and the topology of the route for the at least one vehicle; providing, by the processor, an output that indicates a deviation from the prior load data of the cargo assigned to the vehicle of the least one vehicle. A technical benefit may include more accurate determination of load weight and the ability to take actions based on the more accurate load weight.

Optionally in some examples, including in at least one preferred example, the method may comprise: replanning, by the processor, the route for the vehicle based on the estimated new load weight and the energy status data and health data of the electrical energy storage packs of the vehicle. A technical benefit may include further improved use of the electrical energy storage system of the vehicle when completing the route. For example, it may be determined that that the energy storage system could not handle a given cargo in a hilly area, in which case rerouting may be proposed to avoid the hilly area. Additionally, or alternatively, when the cargo is estimated to be lighter than expected, then the processing circuitry could request rerouting of the vehicle to take additional cargo.

Optionally in some examples, including in at least one preferred example, the method may comprise: evaluating, by the processor, the replanned route in view of the energy status data and health data of the electrical energy storage packs of the vehicle, and adding, by the processor, stops to the replanned route for electrical charging of the electrical energy storage system based on the outcome of the evaluation. A technical benefit may include further improved use of the electrical energy storage system of the vehicle when completing the route.

Optionally in some examples, including in at least one preferred example, the method may comprise: calculating, by the processor, a maximum load data for each of the vehicles for at least some of the planned routes based on the present energy status data and health data of the electrical energy storage packs, wherein, calculating, by the processor, the distribution of the electrical energy storage packs among the vehicles of the fleet is further based on the maximum load data for each of the vehicles. A technical benefit may include more accurate distribution of the electrical energy storage packs to further optimize the use of the electrical energy storage packs.

Optionally in some examples, including in at least one preferred example, the method may comprise: receiving, by the processor, a message indicating a request for additional cargo for one of the vehicles of the fleet and an additional route for the vehicle, and calculating, by the processor, a maximum load data for the vehicle for the additional routes based on an updated present energy status data and health data of the electrical energy storage packs, and if the weight of the additional cargo exceeds the maximum load data, providing, by the processor, an output message indicating to redistribute the cargo to another vehicle of the fleet. A technical benefit may include optimized use of the electrical energy storage packs while still completing the missions on fleet level.

Optionally in some examples, including in at least one preferred example, the method may comprise: receiving, by the processor, a message indicating a request for additional cargo for one of the vehicles of the fleet and an additional route for the vehicle, and calculating, by the processor, a maximum load data for the vehicle for the additional route based on an updated present energy status data and health data of the electrical energy storage packs, and if the weight of the additional cargo exceeds the maximum load data, calculating, by the processor, a new route with minimum number of charging stops for the vehicle to reach the destination of the additional route with the additional cargo and providing an output indicating the new route. A technical benefit may include optimized use of the electrical energy storage packs while still completing the missions on fleet level.

Optionally in some examples, including in at least one preferred example, the predetermined criterion may include that the spread in state of the health's of the electrical energy storage packs of the fleet is less than a predetermined spread threshold. A technical benefit may include that uniform wear and aging of the electrical energy storage packs can be ensured. The electrical energy storage packs of the fleet include the electrical energy storage packs that are not presently installed in a vehicle and the electrical energy storage packs installed in a vehicle, that is, all the electrical energy storage packs that belong to the fleet.

Optionally in some examples, including in at least one preferred example, the at least one predetermined criterion may include maintaining a uniform wear of the electrical energy storage packs within the fleet in terms of both capacity fade and power fade according to respective predetermined spread thresholds. Thus, a further improve uniformity in terms of wear and aging is facilitated.

Optionally in some examples, including in at least one preferred example, the method may comprise: calculating, by the processor, a maximum load data for each vehicle for each route and topology based on the energy status data and health data of the electrical energy storage packs of the fleet, distributing, by the processor, a first set of cargo among a set of vehicles, and, calculating, by the processor, based on the estimated power and energy demand for the planned routes and the obtained energy status data and health data, a distribution of the electrical energy storage packs among the remaining vehicles of the fleet such that the number of electrical energy storage packs utilized by the fleet for completing the planned routes of the remaining cargo is minimized and a state of health parameter of the electrical energy storage packs of the fleet fulfils at least one predetermined criterion. A technical benefit is that the use of the electrical energy storage packs may be more efficient even if the load data is not known for all cargo.

The method may be performed by a processor on a server managing the fleet of vehicles.

There is further provided a computer program product comprising program code for performing, when executed by the processing circuitry, the method of the second aspect.

There is further provided a non-transitory computer-readable storage medium comprising instructions, which when executed by the processing circuitry, cause the processing circuitry to perform the method of the second aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a computer system according to an example.
**FIG. 2** illustrates a set of electrical energy storage systems in a first distribution and in a second distribution.
**FIG. 3** illustrates a topology graph and routes between a first position and a second position.
**FIG. 4** illustrates a vehicle traveling along a route to transport a cargo from a first position to a second position.
**FIG. 5** is a flow chart of an exemplary method to distribute electrical energy storage packs.
**FIG. 6** is a flow chart of a further exemplary method.
**FIG. 7** is a flow chart of a further exemplary method.
**FIG. 8** is a truck according to an example vehicle.
**FIG. 9** is a flow chart according to an example method.
**FIG. 10** is another view of **FIG. 1****,** according to an example.
**FIG. 11** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Electrical energy storages are subject to aging and degradation which affects the amount of energy that they can store. The aging and degradation have a negative impact on the range of electrified vehicles comprising electrical energy storages. In a fleet of electrified vehicles, the health of the electrical energy storages affects the ability for the fleet to complete the missions. For example, some vehicles may not be able to complete their missions efficiently, or not at all, due to the health of the electrical energy storages. However, one benefit of vehicle fleets, is that the use of the electrical energy storages can be considered on a fleet level instead of vehicle level. Accordingly, the electrical energy storages may be distributed so that the missions on a fleet level can be completed with less impact on the electrical energy storages of the entire fleet, or at least so that the health status of the electrical energy storages are better controlled.

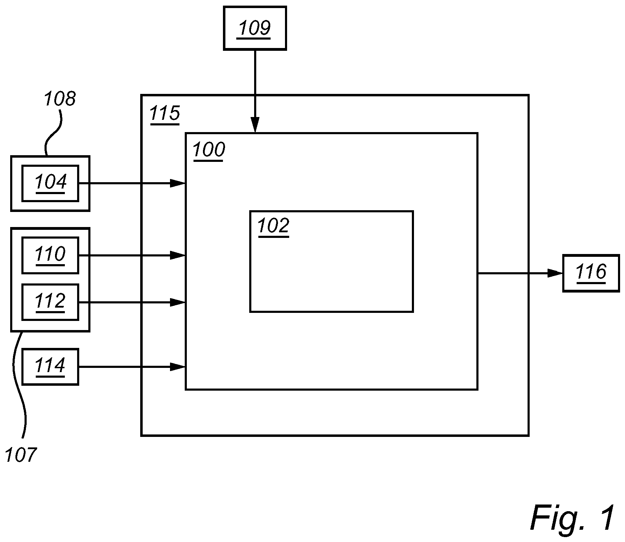

**FIG. 1** is an exemplary system diagram of a computer system 100 comprising processing circuitry 102 according to an example.

The processing circuitry 102 may obtain data 104 of a set of planned routes for a vehicle fleet comprising at least partly electrified vehicles each having an electrical energy storage system 106 comprising at least one electrical energy storage pack 107. The data 104 including at least topology data for the planned routes. In examples, the electrical energy storage system 106 comprise multiple electrical energy storage packs. The

The data 104 of the planned routes may be provided in the form of GPS data including the altitude data that indicates the topology of the planned routes. The planned routes are the routes for the missions of the fleet, where a mission is to transport a cargo from a first position, which may be provided as a first coordinate or first address, to a second position, which may be provided as a second coordinate or second address.

The planned routes 104 may be received from a database 108 that may be a cloud-based storage or a local storage.

The processing circuitry 102 further obtains energy status data 110 and health data 112 of the electrical energy storage systems 106 of the fleet. The energy status data 110 and health data 112 may relate to for example state of energy, SoE, and state of health, SoH, such as capacity fade, SoHq, and/or power fade SoHp of the electrical energy storage packs of the systems 106. The energy status data 110 and health data 112 may be received from the vehicles of the fleet or they may be estimated offline outside of the vehicle.

The processing circuitry 102 acquires load data 114 for cargo to be transported along at least some of the planned routes 104. The load data includes the type of load and is associated with a planned route. For example, a cargo has a pick-up position and a destination position, and optionally a weight, and optionally volume.

The processing circuitry 102 estimates, based on the load data 114 and the topology for the planned routes 104, the power and energy demand for the planned routes. That is, the processing circuitry calculates the energy required to transport a given cargo from a first position, i.e., a pick-up position to a second position being a destination for the cargo, given the distance of the route and the topology which provides the height meters to climb, that is, distance data together with inclination data and declination data. The cargo weight is advantageously included in the calculation of power and energy calculation as well as rolling resistance coefficient of the vehicle, aerodynamic drag coefficient of the given vehicle and estimated energy usage in the vehicle for example based on historic energy usage. Furthermore, additional data that may be used for calculating the power and energy demand for the planned routes include maximum speed limit data along the planned routes.

The processing circuitry 102 calculates, based on the estimated power and energy demand for the planned routes 104 and the obtained energy status data 110 and health data 112, a distribution of the electrical energy storage packs 107 among the vehicles of the fleet such that the number of electrical energy storage packs utilized by the fleet for completing the planned routes is minimized and a state of health parameter of the electrical energy storage packs of the fleet fulfils at least one predetermined criterion.

The state of health parameter may be capacity fade, SoHq, and/or power fade SoHp.

The processing circuitry 102 provides output data 116 indicating the distribution of the electrical energy storage packs 107 among the vehicles of the fleet.

A server 115 may comprise the computer system 100.

The processing circuitry 102 evaluates the health data from the electrical energy storage packs of the fleet, including not only the packs installed in the vehicles but also the electrical energy storage packs in a warehouse 109 or reserve 109 and not presently used by any one of the vehicles of the fleet. That is, the number of electrical energy storage packs utilized by the fleet for completing the planned routes is minimized but with the constraint that the state of health parameter of the electrical energy storage packs must fulfil the at least one criterion. For example, the spread in state of the health's of the electrical energy storage packs of the fleet should be less than a predetermined spread threshold. In another example, the at least one predetermined criterion includes maintaining a uniform wear of the electrical energy storage packs within the fleet in terms of both capacity fade and power fade according to respective predetermined spread thresholds.

In one example, the predetermined criteria is to maintain each of the SoHq (capacity fade) and SoHp (power fade) of the electrical energy storage packs below or at a maximum of 10% difference. That is, the maximum difference in capacity fade of the electrical energy storage packs within the fleet is less than 10% points in capacity fade, and the maximum difference in power fade of the electrical energy storage packs 107 within the fleet is 10% points in power fade. In other examples the predetermined criteria include that the maximum difference in both SoHq (capacity fade) and SoHp (power fade) is 5% points.

Generally, SOH, SOHp, and SOHq is given as a percentage of a beginning of life measurement. Thus, the different in capacity fade and power fade is a difference between two percentage values, often denoted percentage points.

State of health, SOH, may generally be defined as the loss in capacity relative (capacity fade) to a capacity at the beginning of life of the electrical energy storage pack, or the internal resistance increase (power fade) of the electrical energy storage pack relative the internal resistance at the beginning of life of the electrical energy storage pack.

State of health parameters that may be measured for determining a state of health may include at least a state of capacity, a state of resistance, and/or state of power of the electrical energy storage pack. These state of health parameters are well established and advantageously relatively straight-forward to measure and are typically available electrical energy storage pack management systems (BMS), especially in the automotive industry.

In one example, the fleet level uniform wear of the electrical energy storage packs 107 could be implemented via choosing, by the processing circuitry 102, higher SoH (that is, less aged pack) electrical energy storage packs, e.g., both in terms of less capacity fade and less power fade, for being utilized either more often or for being utilized in more energy and/or power demanding routes/vehicles. In case of surplus electrical energy storage packs, then the weakest electrical energy storage packs could be chosen for storage in the reserve or warehouse. The electrical energy storage packs in the reserve could be included into service if high power/energy demanding routes/missions require usage of more electrical energy storage packs or when the SoHq and SoHp of any of the electrical energy storage packs in service/usage fall more than a certain amount, such as 2% points below the strongest electrical energy storage pack in the reserve 109.

It is envisaged that the processing circuitry 102 calculates a maximum load data for each vehicle for each route and topology based on the energy status data 110 and health data 112 of the electrical energy storage systems 106 of the fleet. The processing circuitry 102 provides a message indicating to distribute a first set of cargo among a set of vehicles based on the cargo weight and the energy status data 110 and health data 112 of the electrical energy storage systems 106.

The processing circuitry 102 may subsequently calculate, based on the estimated power and energy demand for the planned routes and the obtained energy status data and health data, a distribution of the electrical energy storage packs among the remaining vehicles of the fleet such that the number of electrical energy storage packs utilized by the fleet for completing the planned routes of the remaining cargo is minimized and a state of health parameter of the electrical energy storage packs of the fleet fulfils at least one predetermined criterion.

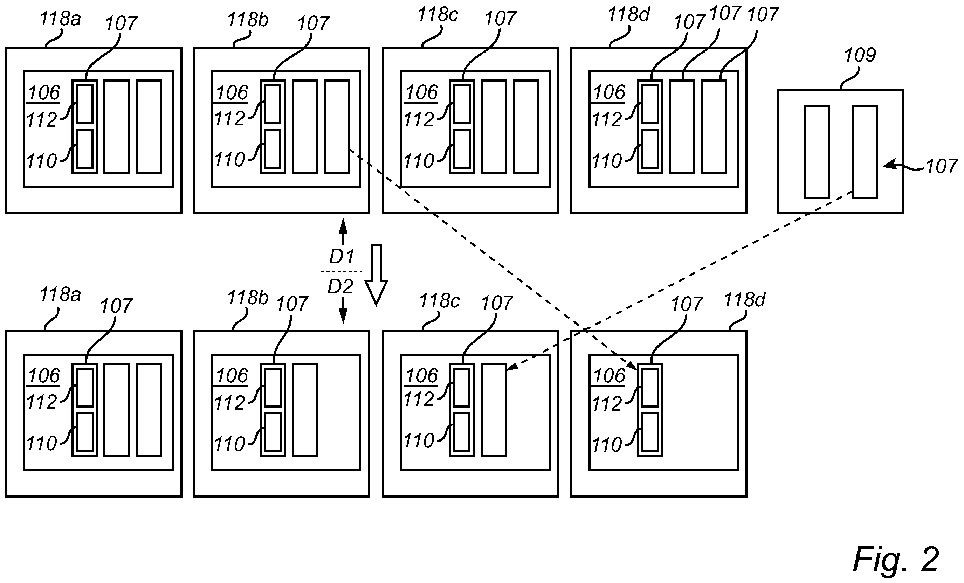

**FIG. 2** illustrates a set of electrical energy storage systems 106 for each of vehicles 118a-d in a first distribution D1 of packs 107, and in a second distribution D2 of pack 107. A distribution describes the number of electrical energy storage packs 107 (not all are numbered) that are assigned to each vehicle 118a-d and the status of the electrical energy storage packs 107 at least in terms of its state of health parameter 112. In the example first distribution each vehicle 118a-d have three electrical energy storage packs 107. The number of packs are here used only for example purposes and the number of electrical energy storage packs in practice may depend on the configuration and type of vehicle.

In a warehouse or reserve 109, there are two electrical energy storage packs 107, each with a respective state of health parameter 112.

By evaluating the energy status data 110 and health data 112 of the electrical energy storage systems 106 in relation to the planned routes and the load data, it can be determined that some of the vehicles are not in need of all their electrical energy storage packs 107 and that they can be used for other purposes or vehicles, or that they can be stored, or saved for future use, in the warehouse 109.

For example, if the vehicle 118a is assigned a mission with a route and topology for which the total energy needed for completing the route requires three electrical energy storage packs 107 with known energy status data 110 and health data 112, then the distribution D2 indicates that the vehicle 118a is assigned the three packs 107. However, the mission assigned to vehicles 118b and 118c do not require the full three electrical energy storage packs 107. Vehicle 118b is assigned two electrical energy storage packs 107 in the distribution D2 which is the minimum amount needed for that vehicle. Furthermore, if only the number of electrical energy storage packs 107 were considered, vehicle 118c may only require a single electrical energy storage pack 107 to complete its mission. However, since the state of health parameters of the electrical energy storage pack 107 of the entire fleet is considered, one electrical energy storage pack 107 from the warehouse 109 with relatively high SOH was assigned to the vehicle 118c. For example, the capacity fade of the electrical energy storage pack 107 may deviate too much compared to the other electrical energy storage packs 107 of the fleet and to ensure uniform wear across the fleet, the electrical energy storage pack 107 from the warehouse is assigned to the vehicle 118c. In other words, even if only one electrical energy storage pack 107 would be sufficient for the vehicle 118c, two electrical energy storage packs 107 in the distribution D2 are assigned to vehicle 118c.

Stated otherwise, it may be that the vehicle 118c may only need a single electrical energy storage pack 107, but, in order to fulfill the predetermined criterion related to state of health of the electrical energy storage packs 107 of the entire fleet, the vehicle 118c received two electrical energy storage packs 107. Overall, there is a surplus of electrical energy storage packs 107 that may be used in other vehicles or that may be saved for future use, for example in the warehouse 109. Similarly, the mission assigned to vehicle 118d does not require the full three electrical energy storage packs 107, instead only one electrical energy storage packs 107 is assigned to the vehicle 118d in the distribution D2.

Furthermore, the surplus of electrical energy storage packs 107 may be shuffled between vehicles. For example, in the original first distribution D1, the vehicle 118d was assigned three electrical energy storage packs 107. In some cases, the energy status data 110 and health data 112 of the original electrical energy storage packs 107 in the distribution D1 indicates that two of the three electrical energy storage packs 107 in vehicle 118d are needed to complete the mission. That is, the potential energy content of the three electrical energy storage packs 107 in vehicle 118d in the first distribution D 1 requires that two of the electrical energy storage packs 107 are used to fulfill the energy requirement for the mission of the vehicle 118d. However, the energy status data 110 and health data 112 of the surplus electrical energy storage packs from the vehicles 118b and 118c may indicate that only one of their surplus packs 107 are sufficient for completion of the mission assigned to the vehicle 118d while at the same time fulfilling the predetermined criterion of the state of health parameter. This surplus pack from one of the vehicles 118b and 118c is then shuffled to the vehicle 118d.

In some implementations, the processing circuitry may calculate a maximum load data for each of the vehicles 118a-d for at least some of the planned routes based on the present energy status data and health data of the electrical energy storage systems 106. The distribution D2 of the electrical energy storage packs 107 among the vehicles 118a-d of the fleet is further based on the maximum load data for each of the vehicles 118a-d. Thus, the distribution D2 may also take into account the maximum load that the vehicle can carry along routes provided its present electrical energy storage packs 107.

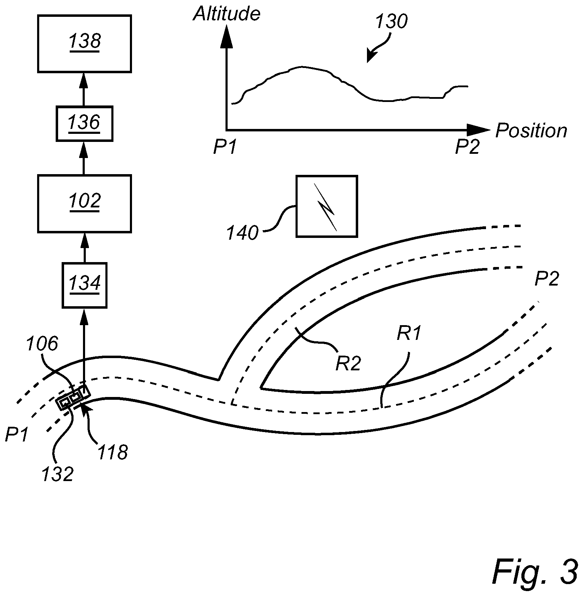

**FIG. 3** illustrates a topology graph 130 and routes R1 between a first position P1 and a second position P2 to exemplify a planned route. The graph 130 shows the topology of the planned route R1. The topology is the altitude, either in absolute numbers as height above sea level, or as relative numbers with for example the altitude at position P1 as the reference altitude. The energy required for completing the mission of transporting a cargo from position P1 to position P2 along route R1 is calculated based on physical principles of taking the weight of the vehicle and the cargo from position P1 to position P2, provided that the total weight must be carried through the hills and valleys of the topology indicated in the graph 130. That is, the total energy to carry a cargo from position P1 to position P2 can be estimated based on calculating e.g., kinetic energy and potential energy along the route.

In fig. 3, a vehicle 118 carrying cargo 132 and equipped with a configuration of electrical energy storage packs 107 is traveling along planned route R1 from position P1 to position P2. While travelling, the processing circuitry 102 may acquire torque demand data 134 from the vehicle 118. The torque demand data 134 is transmitted from a propulsion system of the vehicle 118 that receives a torque demand based on the input from a driver of the vehicle. That is, the driver operates a gas pedal to require torque, whereby the propulsion system delivers energy from the electrical energy storage system 106 based on the requested demand. The processing circuitry 102 can estimate the total weight of the vehicle 118 including the cargo weight based on the torque demand data and the topology of the route R1. In this way, the processing circuitry 102 calculates, by subtracting the weight of the vehicle from the total weight, a new load weight of the cargo. An output 136 is provided that indicates a deviation from the prior load data of the cargo assigned to the at least one vehicle. The output 136 may be provided to a fleet management center 138.

In some implementations, the processing circuitry 102 may evaluate the new load data in view of the energy status data and health data of the electrical energy storage system 106 of the vehicle 118. The new load data may indicate a relatively lighter load, in such case the vehicle 118 may carry on along the prior planned route R1. In such case the processing circuitry 102 need not interfere with the vehicle 118 fulfilling its mission. However, in case the new load data indicates a relatively heavier cargo, the capacity of the electrical energy storage system 106 may be too low to complete the mission along route R1. In such case, the processing circuitry replans the route, here the new route is route R2 between position P1 and P2. Furthermore, the processing circuitry further adds a charging stop at charging station 140 along the new route R2 so that the electrical energy storage system 106 may be recharged sufficiently to complete the mission.

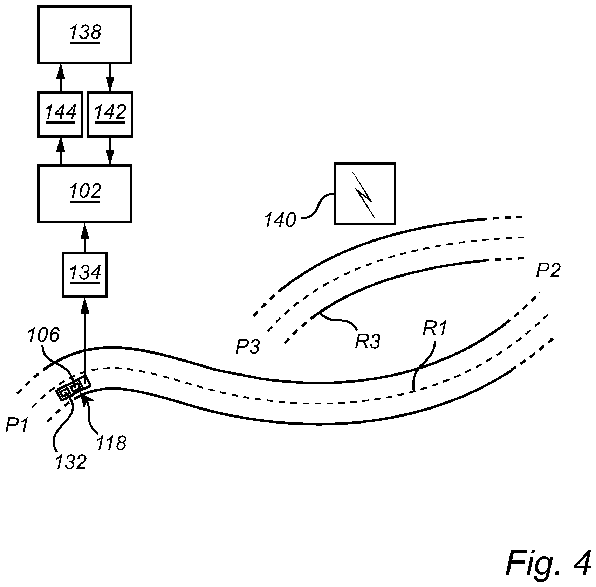

**FIG. 4** illustrates a vehicle 118 traveling along route R1 to transport a cargo 132 from position P1 to position P2. The processing circuitry 102 may receive a message 142 from a fleet management center 138 that indicates a request for additional cargo for one of the vehicles 118 of the fleet and an additional route R3 for the vehicle 118. Upon receiving the message, the processing circuitry 102 calculates the maximum load data for the vehicle 118 for the additional route R3 and its topology based on an updated present energy status data and health data of the electrical energy storage system 106. Based on the outcome of the calculation, different actions may be taken.

If the weight of the additional cargo exceeds the maximum load data, the processing circuitry provides an output message 144 to the fleet management center 138 indicating to redistribute the cargo to another vehicle of the fleet.

Alternatively, if the weight of the additional cargo exceeds the maximum load data, calculate a new route R3 with minimum number of charging stops 140 for the vehicle 118 to reach the destination P3 of the additional route R3 with the additional cargo.

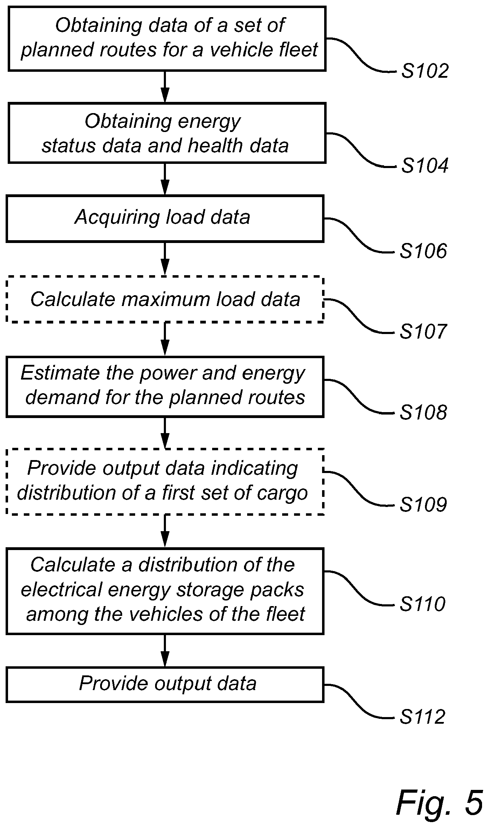

**FIG. 5** is a flow-chart of method steps of an example method.

In step S102 obtaining, by a processor of a computer system, data of a set of planned routes for a vehicle fleet comprising at least partly electrified vehicles each having an electrical energy storage system comprising multiple electrical energy storage packs, the data including at least topology data for the planned routes.

In step S104, obtaining, by the processor, energy status data and health data of the electrical energy storage packs of the fleet.

In step S106, acquiring, by the processor, load data for cargo to be transported along at least some of the planned routes.

In some optional examples, the method includes step S107, comprising calculating, by the processor, a maximum load data for each of the vehicles for at least some of the planned routes based on the present energy status data and health data of the electrical energy storage systems.

In step S108, estimating, by the processor, based on the load data and the topology for the planned routes, the power and energy demand for the planned routes.

In step S 110, calculating, by the processor, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfils at least one predetermined criterion. Furthermore, step S 110 may include calculating, by the processor, the distribution of the electrical energy storage packs among the vehicles of the fleet is further based on the maximum load data for each of the vehicles.

In step S112 providing, by the processor, output data indicating the distribution of the electrical energy storage packs among the vehicles of the fleet.

Optionally, step S109 is included which comprises providing output data indication distribution, by the processor, a first set of cargo among a set of vehicles. In this case, step S 110 includes calculating, by the processor, based on the estimated power and energy demand for the planned routes and the obtained energy status data and health data, a distribution of the electrical energy storage packs among the remaining vehicles of the fleet such that the number of electrical energy storage packs utilized by the fleet for completing the planned routes of the remaining cargo is minimized and a state of health parameter of the electrical energy storage packs of the fleet fulfils at least one predetermined criterion.

Calculating the distribution of the electrical energy storage packs may be done by various methods and algorithms and may be set up as an optimization problem or may be performed by machine learning algorithm.

It is envisaged that the processing circuitry tests all combinations of distributions of electrical energy storage packs to find the combination that minimizes the number of electrical energy storage packs based on the estimated power and energy demand for the planned routes and the obtained energy status data and health data. The combination that also fulfills the at least one predetermined criterion concerning the state of health parameter of the electrical energy storage packs is selected.

In one example, an input may be the weights of the cargo with known planned routes, including topography parameters, weather data, vehicle type, used energy, cargo load, SoHq and SoHp data of all the previous routes/missions. The algorithm, e.g., optimization or machine learning algorithm, may then optimize for minimum number of electrical energy storage packs required to complete the missions while at the same time fulfil the at least one predetermined criterion for the state of health parameter.

In some examples, the cargo weight is not known. In such case, the problem definition for the algorithm is to determine the maximum potential cargo for the missions associated with the planned routes. Inputs to the algorithm may here include electrical energy storage configuration such as number of electrical energy storage packs, topography of the routes, weather, vehicle type, used energy, cargo load, SoHq and SoHp data of all the previous routes/missions. The algorithm may then calculate the maximum potential cargo for the routes.

In some examples, it is desirable to determine if vehicle could be loaded more or take additional missions/routes. The input in such case may include electrical energy storage configuration such as number of electrical energy storage pack cargo weight and known route, topography of the route, weather, vehicle type, used energy, cargo load, SoHq and SoHp data of all the previous routes/missions. The expected output is the maximum cargo for the given route and/or extended route for possibility to load additional cargo.

Once the fleet of vehicles are on their missions, various replanning may be performed by the processor.

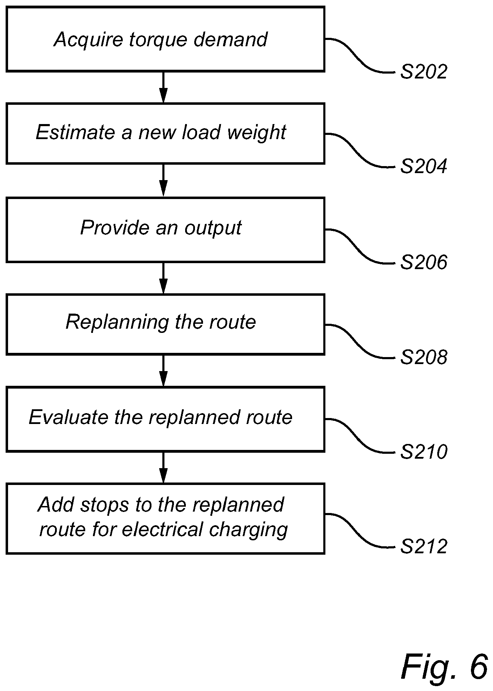

**FIG. 6** is a flow-chart of method steps of an example method.

In step S202 acquiring, by the processor, torque demand data from at least one of the vehicles when on a planned route to complete a mission.

In step S204 estimating, by the processor, a new load weight of the at least one vehicle based on the torque demand data and the topology of the route for the at least one vehicle.

In step S206 providing, by the processor, an output that indicates a deviation from the prior load data of the cargo assigned to the vehicle of the least one vehicle.

The output may be used by a fleet owner to take appropriate actions. Furthermore, actions for the fleet to complete the fleet level mission more efficiently may be taken and are described below.

In step S208, replanning, by the processor, the route for the vehicle based on the estimated new load weight and the energy status data and health data of the electrical energy storage packs of the vehicle.

In step S210, evaluating, by the processor, the replanned route in view of the energy status data and health data of the electrical energy storage system of the vehicle.

In step S212, adding, by the processor, stops to the replanned route for electrical charging of the electrical energy storage system based on the outcome of the evaluation.

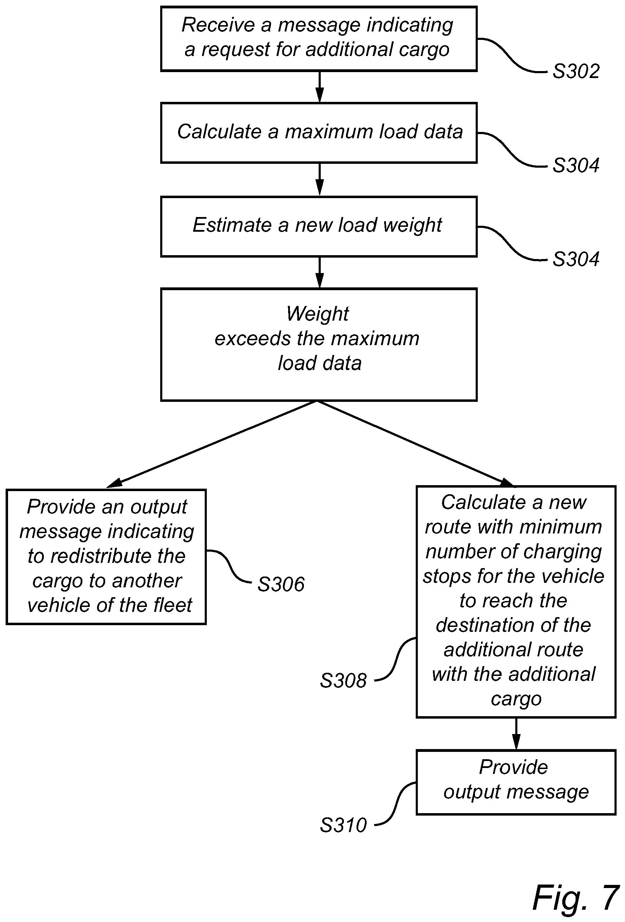

**FIG. 7** is a flow-chart of method steps of an example method, also applicable when the fleet is on its missions.

In Step S302 receiving, by the processor, a message indicating a request for additional cargo for one of the vehicles of the fleet and an additional route for the vehicle.

In step S304 calculating, by the processor, a maximum load data for the vehicle for the additional routes based on an updated present energy status data and health data of the electrical energy storage system.

If the weight of the additional cargo exceeds the maximum load data there are two main possibilities.

Firstly, in step S306, providing, by the processor, an output message indicating to redistribute the cargo to another vehicle of the fleet.

Alternatively, calculating in step S308, by the processor, a new route with minimum number of charging stops for the vehicle to reach the destination of the additional route with the additional cargo, and provide an output indicating the new route in step S310.

It is noted that cargo load data, cargo volume and remaining volume on the vehicles may be used for establishing the additional cargo capability of the vehicles.

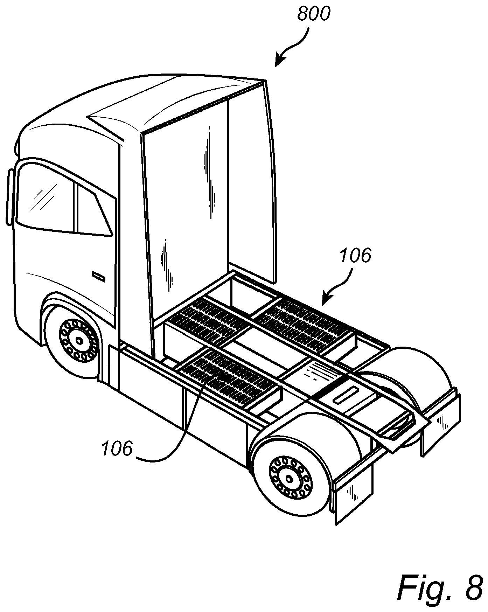

**FIG. 8** is an example vehicle 800 according to embodiments of the present disclosure. The vehicle 800 is here shown as a heavy-duty truck but other types of vehicles are also applicable. The vehicle 800 comprises a hybrid-, or fully electric driveline that is powered by an electrical energy storage system 106 comprising multiple parallel connected electrical energy storage packs 107. The electrical energy storage packs 104 comprises a plurality of electrical energy storage cells, such as for example Li-ion cells.

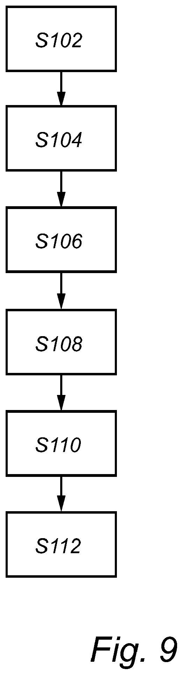

**FIG. 9** is another view of FIG. 1, according to an example. A computer system 100 comprising processing circuitry 102 configured to obtain data 104 of a set of planned routes for a vehicle fleet comprising at least partly electrified vehicles each having an electrical energy storage system 106 comprising multiple electrical energy storage packs, the data including at least topology data for the planned routes.

The processing circuitry 102 is configured to obtain energy status data 110 and health data 112 of the electrical energy storage packs of the fleet.

The processing circuitry 102 is configured to acquire load data 114 for cargo to be transported along at least some of the planned routes.

The processing circuitry 102 is configured to estimate, based on the load data and the topology for the planned routes, the power and energy demand for the planned routes.

The processing circuitry 102 is configured to calculate, based on the estimated power and energy demand for the planned routes 104 and the obtained energy status data and health data, a distribution of the electrical energy storage packs among the vehicles of the fleet such that the number of electrical energy storage packs utilized by the fleet for completing the planned routes is minimized.

The processing circuitry 102 is configured to provide output data 116 indicating the distribution of the electrical energy storage packs among the vehicles of the fleet.

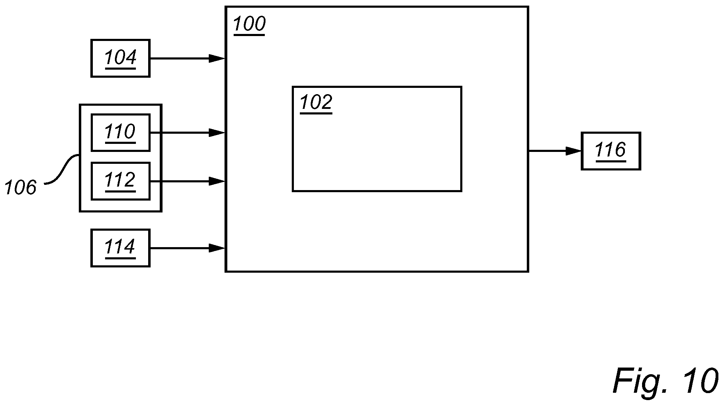

**FIG. 10** is a flow chart of a method according to an example. In step S102 obtaining, by a processor of a computer system, data of a set of planned routes for a vehicle fleet comprising at least partly electrified vehicles each having an electrical energy storage system comprising multiple electrical energy storage packs, the data including at least topology data for the planned routes.

In step S 104, obtaining, by the processor, energy status data and health data of the electrical energy storage packs of the fleet.

In step S 106, acquiring, by the processor, load data for cargo to be transported along at least some of the planned routes.

In step S 108, estimating, by the processor, based on the load data and the topology for the planned routes, the power and energy demand for the planned routes.

In step S 110, calculating, by the processor, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfills at least one predetermined criterion.

In step S112 providing, by the processor, output data indicating the distribution of the electrical energy storage packs among the vehicles of the fleet.

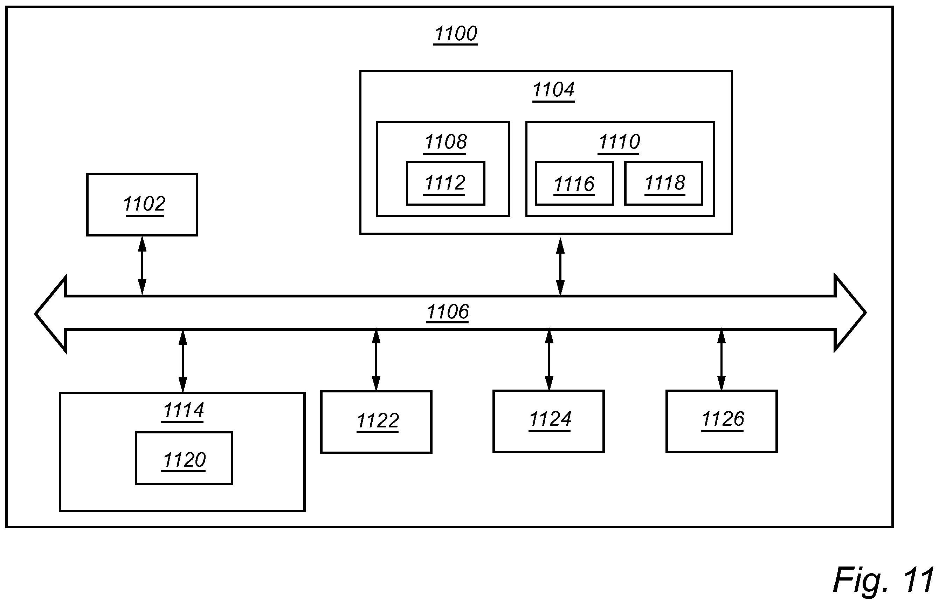

**FIG. 11** is a schematic diagram of a computer system **1100** for implementing examples disclosed herein. The computer system **1100** is adapted to execute instructions from a computer-readable medium to perform these and/or any of the functions or processing described herein. The computer system **1100** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **1100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1100** may comprise at least one computing device or electronic device capable of including firmware, hardware, and/or executing software instructions to implement the functionality described herein. The computer system **1100** may include processing circuitry **1102** (e.g., processing circuitry including one or more processor devices or control units), a memory **1104,** and a system bus **1106.** The computer system **1100** may include at least one computing device having the processing circuitry **1102.** The system bus **1106** provides an interface for system components including, but not limited to, the memory **1104** and the processing circuitry **1102.** The processing circuitry **1102** may include any number of hardware components for conducting data or signal processing or for executing computer code stored in memory **1104.** The processing circuitry **1102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1102** may further include computer executable code that controls operation of the programmable device.

The system bus **1106** may be any of several types of bus structures that may further interconnect to a memory bus (with or without a memory controller), a peripheral bus, and/or a local bus using any of a variety of bus architectures. The memory **1104** may be one or more devices for storing data and/or computer code for completing or facilitating methods described herein. The memory **1104** may include database components, object code components, script components, or other types of information structure for supporting the various activities herein. Any distributed or local memory device may be utilized with the systems and methods of this description. The memory **1104** may be communicably connected to the processing circuitry **1102** (e.g., via a circuit or any other wired, wireless, or network connection) and may include computer code for executing one or more processes described herein. The memory **1104** may include non-volatile memory **1108** (e.g., read-only memory (ROM), erasable programmable read-only memory (EPROM), electrically erasable programmable read-only memory (EEPROM), etc.), and volatile memory **1110** (e.g., random-access memory (RAM)), or any other medium which can be used to carry or store desired program code in the form of machine-executable instructions or data structures and which can be accessed by a computer or other machine with processing circuitry **1102.** A basic input/output system (BIOS) **1112** may be stored in the non-volatile memory **1108** and can include the basic routines that help to transfer information between elements within the computer system **1100.**

The computer system **1100** may further include or be coupled to a non-transitory computer-readable storage medium such as the storage device **1114,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1114** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1114** and/or in the volatile memory **1110,** which may include an operating system **1116** and/or one or more program modules **1118.** All or a portion of the examples disclosed herein may be implemented as a computer program **1120** stored on a transitory or non-transitory computer-usable or computer-readable storage medium (e.g., single medium or multiple media), such as the storage device **1114,** which includes complex programming instructions (e.g., complex computer-readable program code) to cause the processing circuitry **1102** to carry out actions described herein. Thus, the computer-readable program code of the computer program **1120** can comprise software instructions for implementing the functionality of the examples described herein when executed by the processing circuitry **1102.** In some examples, the storage device **1114** may be a computer program product (e.g., readable storage medium) storing the computer program **1120** thereon, where at least a portion of a computer program **1120** may be loadable (e.g., into a processor) for implementing the functionality of the examples described herein when executed by the processing circuitry **1102.** The processing circuitry **1102** may serve as a controller or control system for the computer system **1100** that is to implement the functionality described herein.

The computer system **1100** may include an input device interface **1122** configured to receive input and selections to be communicated to the computer system **1100** when executing instructions, such as from a keyboard, mouse, touch-sensitive surface, etc. Such input devices may be connected to the processing circuitry **1102** through the input device interface **1122** coupled to the system bus **1106** but can be connected through other interfaces, such as a parallel port, an Institute of Electrical and Electronic Engineers (IEEE) 1394 serial port, a Universal Serial Bus (USB) port, an IR interface, and the like. The computer system **1100** may include an output device interface **1124** configured to forward output, such as to a display, a video display unit (e.g., a liquid crystal display (LCD) or a cathode ray tube (CRT)). The computer system **1100** may include a communications interface **1126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: obtain data of a set of planned routes for a vehicle fleet comprising at least partly electrified vehicles each having an electrical energy storage system comprising at least one electrical energy storage packs, the data including at least topology data for the planned routes, obtain energy status data and health data of the electrical energy storage systems of the fleet, acquire load data for cargo to be transported along at least some of the planned routes; estimate, based on the load data and the topology for the planned routes, the power and energy demand for the planned routes; and calculate, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfills at least one predetermined criterion, and provide output data indicating the distribution of the electrical energy storage packs among the vehicles of the fleet.

Example 2: The computer system of claim 1, wherein the predetermined criterion includes that the spread in state of the health's of the electrical energy storage packs of the fleet is less than a predetermined spread threshold.

Example 3: The computer system of any of claims 1-2, wherein the at least one predetermined criterion includes maintaining a uniform wear of the electrical energy storage packs within the fleet in terms of both capacity fade and power fade according to respective predetermined spread thresholds.Example 4: The computer system of any of examples 1-3, wherein the processing circuitry is further configured to: acquire torque demand data from at least one of the vehicles when on a planned route to complete a mission; estimate a new load weight of the at least one vehicle based on the torque demand data and the topology of the route for the at least one vehicle; provide an output that indicates a deviation from the prior load data of the cargo assigned to the at least one vehicle.

Example 5: The computer system of example 4, wherein the processing circuitry is further configured to: replan the route for the vehicle based on the estimated new load weight and the energy status data and health data of the electrical energy storage system of the vehicle.

Example 6: The computer system of any of examples 4-5, wherein the processing circuitry is further configured to: evaluate the replanned route in view of the energy status data and health data of the electrical energy storage system of the vehicle, and add stops to the replanned route for electrical charging of the electrical energy storage system based on the outcome of the evaluation.

Example 7: The computer system of any of examples 1-6, wherein the processing circuitry is further configured to: calculate a maximum load data for each of the vehicles for at least some of the planned routes based on the present energy status data and health data of the electrical energy storage systems, wherein, calculating the distribution of the electrical energy storage packs among the vehicles of the fleet is further based on the maximum load data for each of the vehicles.

Example 8: The computer system of any of examples 1-7, wherein the processing circuitry is further configured to: receive a message indicating a request for additional cargo for one of the vehicles of the fleet and an additional route for the vehicle, and calculate a maximum load data for the vehicle for the additional routes based on an updated present energy status data and health data of the electrical energy storage system, and if the weight of the additional cargo exceeds the maximum load data, provide an output message indicating to redistribute the cargo to another vehicle of the fleet.

Example 9: The computer system of any of examples 1-7, wherein the processing circuitry is further configured to: receive a message indicating a request for additional cargo for one of the vehicles of the fleet and an additional route for the vehicle, and calculate a maximum load data for the vehicle for the additional route based on an updated present energy status data and health data of the electrical energy storage system, and if the weight of the additional cargo exceeds the maximum load data, calculate a new route with minimum number of charging stops for the vehicle to reach the destination of the additional route with the additional cargo and, provide an output indicating the new route.

Example 10: A computer system of example 1, wherein the processing circuitry is further configured to: calculate a maximum load data for each vehicle for each route and topology based on the energy status data and health data of the electrical energy storage systems of the fleet, distribute a first set of cargo among a set of vehicles, and, calculate, based on the estimated power and energy demand for the planned routes and the obtained energy status data and health data, a distribution of the electrical energy storage packs among the remaining vehicles of the fleet such that the number of electrical energy storage packs utilized by the fleet for completing the planned routes of the remaining cargo is minimized and a state of health parameter of the electrical energy storage packs of the fleet fulfils at least one predetermined criterion.

Example 11: A server comprising the computer system of any of examples 1-10.

Example 12: A computer-implemented method, comprising: obtaining, by a processor of a computer system, data of a set of planned routes for a vehicle fleet comprising at least partly electrified vehicles each having an electrical energy storage system comprising at least one electrical energy storage packs, the data including at least topology data for the planned routes, obtaining, by the processor, energy status data and health data of the electrical energy storage systems of the fleet, acquiring, by the processor, load data for cargo to be transported along at least some of the planned routes; estimating, by the processor, based on the load data and the topology for the planned routes, the power and energy demand for the planned routes; and calculating, by the processor, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfils at least one predetermined criterion, and providing, by the processor, output data indicating the distribution of the electrical energy storage packs among the vehicles of the fleet.

Example 13: The method of example 12, comprising: acquiring, by the processor, torque demand data from at least one of the vehicles when on a planned route to complete a mission; estimating, by the processor, a new load weight of the at least one vehicle based on the torque demand data and the topology of the route for the at least one vehicle; providing, by the processor, an output that indicates a deviation from the prior load data of the cargo assigned to the vehicle of the least one vehicle.

Example 14: The method of example 13, comprising: replanning, by the processor, the route for the vehicle based on the estimated new load weight and the energy status data and health data of the electrical energy storage system of the vehicle.

Example 15: The method of any of examples 13-14, comprising: evaluating, by the processor, the replanned route in view of the energy status data and health data of the electrical energy storage system of the vehicle, and adding, by the processor, stops to the replanned route for electrical charging of the electrical energy storage system based on the outcome of the evaluation.

Example 16: The method of any of examples 13-15, comprising: calculating, by the processor, a maximum load data for each of the vehicles for at least some of the planned routes based on the present energy status data and health data of the electrical energy storage systems, wherein, calculating, by the processor, the distribution of the electrical energy storage packs among the vehicles of the fleet is further based on the maximum load data for each of the vehicles.

Example 17: The method of any of examples 12-16, comprising: receiving, by the processor, a message indicating a request for additional cargo for one of the vehicles of the fleet and an additional route for the vehicle, and calculating, by the processor, a maximum load data for the vehicle for the additional routes based on an updated present energy status data and health data of the electrical energy storage system, and if the weight of the additional cargo exceeds the maximum load data, providing, by the processor, an output message indicating to redistribute the cargo to another vehicle of the fleet.

Example 18: The method of any of examples 12-17, comprising: receiving, by the processor, a message indicating a request for additional cargo for one of the vehicles of the fleet and an additional route for the vehicle, and calculating, by the processor, a maximum load data for the vehicle for the additional route based on an updated present energy status data and health data of the electrical energy storage system, and if the weight of the additional cargo exceeds the maximum load data, calculating, by the processor, a new route with minimum number of charging stops for the vehicle to reach the destination of the additional route with the additional cargo, and providing an output indicating the new route.

Example 19: The method of any of claims 12-18, wherein the predetermined criterion includes that the spread in state of the health's of the electrical energy storage packs of the fleet is less than a predetermined threshold.

Example 20: The method of any of claims 12-19, wherein the at least one predetermined criterion includes maintaining a uniform wear of the electrical energy storage packs within the fleet in terms of both capacity fade and power fade according to respective predetermined spread thresholds.

Example 21: The method of example 12 comprising: calculating, by the processor, a maximum load data for each vehicle for each route and topology based on the energy status data and health data of the electrical energy storage systems of the fleet, providing a distribution, by the processor, of a first set of cargo among a set of vehicles, and, calculating, by the processor, based on the estimated power and energy demand for the planned routes and the obtained energy status data and health data, a distribution of the electrical energy storage packs among the remaining vehicles of the fleet such that the number of electrical energy storage packs utilized by the fleet for completing the planned routes of the remaining cargo is minimized.

Example 22: The method of any of examples 12-20, performed by a processor on a server managing the fleet of vehicles.

Example 23: A computer program product comprising program code for performing, when executed by the processing circuitry, the method of any of examples 12-21.

Example 24: A non-transitory computer-readable storage medium comprising instructions, which when executed by the processing circuitry, cause the processing circuitry to perform the method of any of examples 12-21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (102) configured to:
obtain data (104) of a set of planned routes for a vehicle fleet comprising at least partly electrified vehicles each having an electrical energy storage system comprising at least one electrical energy storage pack (107), the data including at least topology data (130) for the planned routes,
obtain energy status data (110) and health data (112) of the electrical energy storage packs (106) of the fleet,
acquire load data (114) for cargo to be transported along at least some of the planned routes;
estimate, based on the load data and the topology for the planned routes, the power and energy demand for the planned routes; and
calculate, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfills at least one predetermined criterion, and
provide output data (116) indicating the distribution of the electrical energy storage packs among the vehicles of the fleet.

2. The computer system of claim 1, wherein the predetermined criterion includes that the spread in state of the health's of the electrical energy storage packs of the fleet is less than a predetermined spread threshold.

3. The computer system of any of claims 1-2, wherein the at least one predetermined criterion includes maintaining a uniform wear of the electrical energy storage packs within the fleet in terms of both capacity fade and power fade according to respective predetermined spread thresholds.

4. The computer system of any of claims 1-3, wherein the processing circuitry is further configured to:
acquire torque demand data (134) from at least one of the vehicles when on a planned route to complete a mission;
estimate a new load weight of the at least one vehicle based on the torque demand data and the topology of the route for the at least one vehicle;
provide an output (136) that indicates a deviation from the prior load data of the cargo assigned to the at least one vehicle.

5. The computer system of claim 4, wherein the processing circuitry is further configured to:
replan the route for the vehicle based on the estimated new load weight and the energy status data and health data of the electrical energy storage system of the vehicle, and
provide an output of the replanned route.

6. The computer system of any of claims 4-5, wherein the processing circuitry is further configured to:
evaluate the replanned route in view of the energy status data and health data of the electrical energy storage system of the vehicle, and
add stops (140) to the replanned route for electrical charging of the electrical energy storage system based on the outcome of the evaluation.

7. The computer system of any of claims 1-6, wherein the processing circuitry is further configured to:
calculate a maximum load data for each of the vehicles for at least some of the planned routes based on the present energy status data and health data of the electrical energy storage packs, wherein,
calculating the distribution of the electrical energy storage packs among the vehicles of the fleet is further based on the maximum load data for each of the vehicles.

8. The computer system of any of claims 1-7, wherein the processing circuitry is further configured to:
receive a message indicating a request for additional cargo for one of the vehicles of the fleet and an additional route for the vehicle, and
calculate a maximum load data for the vehicle for the additional routes based on an updated present energy status data and health data of the electrical energy storage packs, and
if the weight of the additional cargo exceeds the maximum load data, provide an output message indicating to redistribute the cargo to another vehicle of the fleet.

9. The computer system of any of claims 1-7, wherein the processing circuitry is further configured to:
receive a message indicating a request for additional cargo for one of the vehicles of the fleet and an additional route for the vehicle, and
calculate a maximum load data for the vehicle for the additional route based on an updated present energy status data and health data of the electrical energy storage packs, and
if the weight of the additional cargo exceeds the maximum load data, calculate a new route with minimum number of charging stops for the vehicle to reach the destination of the additional route with the additional cargo and,
provide an output indicating the new route.

10. A computer system of claim 1, wherein the processing circuitry is further configured to:
calculate a maximum load data for each vehicle for each route and topology based on the energy status data and health data of the electrical energy storage packs of the fleet, distribute a first set of cargo among a set of vehicles, and,
calculate, based on the estimated power and energy demand for the planned routes and the obtained energy status data and health data, a distribution of the electrical energy storage packs among the remaining vehicles of the fleet such that the number of electrical energy storage packs utilized by the fleet for completing the planned routes of the remaining cargo is minimized and a state of health parameter of the electrical energy storage packs of the fleet fulfils at least one predetermined criterion.

11. A server (115) comprising the computer system of any of claims 1-10.

12. A computer-implemented method, comprising:
obtaining (S102), by a processor of a computer system, data of a set of planned routes for a vehicle fleet comprising at least partly electrified vehicles each having an electrical energy storage system comprising at least one electrical energy storage pack, the data including at least topology data for the planned routes,
obtaining (S 104), by the processor, energy status data and health data of the electrical energy storage packs of the fleet,
acquiring (S106), by the processor, load data for cargo to be transported along at least some of the planned routes;
estimating (S108), by the processor, based on the load data and the topology for the planned routes, the power and energy demand for the planned routes; and
calculating (S110), by the processor, based on the estimated power and energy demand for the planned routes and the obtained energy status data and health data, a distribution of the electrical energy storage packs among the vehicles of the fleet such that the number of electrical energy storage packs utilized by the fleet for completing the planned routes is minimized and a state of health parameter of the electrical energy storage packs of the fleet fulfils at least one predetermined criterion, and
providing (S1 12), by the processor, output data indicating the distribution of the electrical energy storage packs among the vehicles of the fleet.

13. The method of claim 12, comprising:
acquiring (S202), by the processor, torque demand data from at least one of the vehicles when on a planned route to complete a mission;
estimating (S204), by the processor, a new load weight of the at least one vehicle based on the torque demand data and the topology of the route for the at least one vehicle;
providing (S206), by the processor, an output that indicates a deviation from the prior load data of the cargo assigned to the vehicle of the least one vehicle.

14. A computer program product comprising program code for performing, when executed by the processing circuitry, the method of any of claims 12-13.

15. A non-transitory computer-readable storage medium comprising instructions, which when executed by the processing circuitry, cause the processing circuitry to perform the method of any of claims 12-13.
